# EUROPÄISCHE PATENTANMELDUNG

(11) **EP 1 774 848 A1**
(43) Veröffentlichungstag der Anmeldung: **18.04.2007**
(21) Anmeldenummer: 05022227.2
(22) Anmeldetag: 12.10.2005
(51) Int. Cl.: A01G 13/04

(54) **Vorrichtung zum Schutz von Pflanzen vor Frost**

(71) Anmelder: Dynatherm Systemtechnik GmbH, 64546 Mörfelden-Waldorf (DE)
(72) Erfinder: Steiner, Detlef, 64546 Mörfelden-Walldorf (DE)
(74) Vertreter: Quermann, Helmut

(57) **Zusammenfassung**

Die Erfindung betrifft eine Vorrichtung zum Schutz von Pflanzen (3) vor Frost, mit einer Heizeinrichtung (8) und einer Hülle (9) zum Umgeben des außerhalb des Erdreichs (2) der Pflanze befindlichen Pflanzenbereichs (4).

Bei einer solchen Vorrichtung wird vorgeschlagen, dass die Heizeinrichtung ein Heizband (12) aufweist, das beliebig um die Pflanze in dem außerhalb des Erdreichs der Pflanze befindlichen Pflanzenbereich legbar ist sowie die Hülle als mehrlagige Luftpolster-Folie ausgebildet ist.

Eine solche Vorrichtung zeichnet sich durch eine besonders einfache und kostengünstige Bauweise bei unkomplizierter Handhabung aus und gewährleistet einen sicheren Schutz der Pflanze gegen Frostschäden.

## Beschreibung

Die Erfindung betrifft eine Vorrichtung zum Schutz von Pflanzen vor Frost, mit einer Heizeinrichtung und einer Hülle zum Umgeben des außerhalb des Erdreiches der Pflanze befindlichen Pflanzenbereichs.

Eine derartige Vorrichtung ist aus der DE 102 52 104 A1 bekannt. Diese dient dem Schutz solcher Pflanzen, die dauerhaft in das Erdreich eingesetzt sind. Es handelt sich demzufolge nicht um den Schutz von Kübelpflanzen vor Frost.

Bei dieser bekannten Vorrichtung ist in das Erdreich eine Haube eingebracht, die das Wurzelwerk der Pflanze abdeckt. Innerhalb des von der Haube umschlossenen Raumes ist eine erste Heizeinrichtung in das Erdreich eingebracht und dient dem Temperieren des Erdreichs im Wurzelbereich der Pflanze. Oberhalb der Haube und oberhalb des Erdreichs ist eine zweite Heizeinrichtung vorgesehen, die einen Raum temperiert, der zwischen dem Erdreich der Pflanze und einer oberhalb des Erdreichs angeordneten Hülle, die sich unmittelbar an das Erdreich anschließt, gebildet ist. Diese Hülle ist aus wärmedämmendem Material und durchsichtig. Die Hülle ist als stabiles, steifes Bauteil ausgebildet und in ihrem oberen Bereich mit einer Belüftungseinrichtung und einer Beleuchtungseinrichtung ausgestattet. Die Hülle weist somit die Funktion eines Gewächshauses auf, innerhalb dessen die Pflanze angeordnet ist. Bei den jeweiligen Heizeinrichtungen handelt es sich um Heizelemente. Die Heizung im Erdreich stellt sicher, dass der Wurzelbereich während der Frostperioden frostfrei bleibt. Die Heizeinrichtung innerhalb der Haube verhindert ein Einfrieren der Kapillaren im Stamm und den Blättern der Pflanze und gewährleistet damit, dass auch die oberirdischen Pflanzenteile ohne Schaden über den Winter kommen.

Die beschriebene Vorrichtung ist baulich äußerst aufwendig, da sie nicht nur den Bereich der Pflanze oberhalb des Erdreichs betrifft, sondern auch unmittelbar deren Wurzelbereich. Die Vorrichtung ist deshalb aufwendig zu installieren. Diese Nachteile sind auch bezüglich der Hülle zu verzeichnen, da diese auf Grund deren eigenstabilen Gestaltung und der Aufnahme zusätzlicher Einheiten, konkret der Belüftungseinrichtung und der Beleuchtungseinrichtung, zu gestalten ist. Abgesehen hiervon ist die Energieaufnahme bei dieser Vorrichtung recht hoch, weil ein relativ großer Raum zu temperieren ist und dies überdies über in deutlichem Abstand zur Pflanze angeordnete Heizeinrichtungen erfolgt, die den gesamten, recht großen, von der Haube und der Hülle umschlossenen Raum zu temperieren haben.

In der DE 298 08 095 U1 ist eine Frostschutzvorrichtung für Kübelpflanzen beschrieben. Dort wird um den Kübel bzw. Blumentopf herum ein Mantel, zum Beispiel aus Styropor, angebracht, der einen Wärmeerzeuger, an seiner Innenseite integriert oder im Material eingearbeitet, aufweist. Der Mantel ist beispielsweise zweiteilig ausgebildet und kann zum Aufnehmen des Kübels aufgeklappt und in den Kübel umschließender Position im Mantelteil fixiert werden. Über der Pflanze ist eine Luftpolster-Folie angebracht, die bei großen Gewächsen von einem Gestänge, beispielsweise einem Drahtbügel, gehalten wird. Die Folie wird am Mantel außen fixiert. Der Wärmeerzeuger gibt seine Energie an den Blumentopf ab, erwärmt diesen und die darin befindliche Pflanze. Da die erzeugte Wärme nach oben steigt und die Pflanze von einer Hülle umgeben ist, entsteht ein von der Außentemperatur unabhängiges Klima.

Nachteilig ist bei dieser bekannten Vorrichtung der hohe bauliche Aufwand im Zusammenhang mit der Gestaltung des Mantels. Hiermit gehen hohe Gestehungskosten der Vorrichtung einher. Die Frostschutzvorrichtung ist, auf Grund dessen notwendigen Anpassens der Größe des Mantels an die Größe des Kübels, nicht universell einsetzbar. Es wird bei dieser Frostschutzvorrichtung zwingend das Erdreich der Pflanze erwärmt. Dies ist bei bestimmten Pflanzensorten nicht erwünscht. Nur über die Erwärmung des Erdreichs kann Wärme an den Bereich der Pflanze abgegeben werden, der sich oberhalb des Erdreichs der Pflanze befindet. Diese Frostschutzvorrichtung ist nicht universell für Kübelpflanzen und Pflanzen, die dauerhaft in das Erdreich eingesetzt sind, verwendbar.

Ein beheizbares Minigewächshaus für frostempfindliche, schwere, einzelne Kübelpflanzen, in dem die Temperatur über einen Thermostaten gesteuert wird, ist aus der DE 299 04 752 U1 bekannt.

Aufgabe der vorliegenden Erfindung ist es, eine Vorrichtung der eingangs genannten Art zu schaffen, die bei einfacher und kostengünstiger Bauweise sowie unkomplizierter Handhabung einen sicheren Schutz der Pflanzen gegen Frostschäden sicherstellt.

Gelöst wird die Aufgabe durch eine Vorrichtung der eingangs genannten Art, die gekennzeichnet ist durch folgende Merkmale:
- die Heizeinrichtung weist ein Heizband auf, das beliebig um die Pflanze in dem außerhalb des Erdreichs der Pflanze befindlichen Pflanzenbereich legbar ist,
- die Hülle ist als mehrlagige Luftpolster-Folie ausgebildet.

Die Ausbildung der Heizeinrichtung als Heizband ermöglicht es, dieses beliebig unmittelbar um die Pflanze und gegebenenfalls, sofern dies für erforderlich erachtet wird, um den Kübel zu wickeln. Da die Wicklung beliebig vorgenommen werden kann, lässt sich die Heizwärme unkompliziert denjenigen Bereichen der Pflanze zuführen, die bei Frost einer Gefährdung unterliegen. Grundsätzlich dürfte es ausreichen, das Heizband ausschließlich im Bereich des Blattwerks der Pflanze anzubringen. Das Heizband wird zwischen den einzelnen Ästen und Blättern der Pflanze hindurchgezogen. Diese beliebige Anordnung des Heizbandes ermöglicht es, das Heizband recht nahe am Stamm, somit in einem zentralen Bereich der Pflanze zu positionieren. Wird das Heizband eher im Bereich der Außenkontur des Blattwerks auf die Pflanze gelegt, insbesondere wendelförmig angeordnet, entsteht primär in diesem Bereich die Wärme, um den Frostschutz zu sichern. Da das Heizband auf besonders einfacher Art und Weise zu verlegen ist und die Intensität der Wärmeabgabe, bei Vorraussetzung derselben wärmetechnischen Daten des Heizbandes, nur von dessen Länge abhängt, kann mittels des Heizbandes durchaus auch der die Pflanze aufnehmende Kübel umwickelt werden.

Überall dort, wo das Heizband angeordnet ist, somit zumindest in dem Bereich der Pflanze, der sich außerhalb des Erdreiches befindet, ist die Hülle anzuordnen. In einfachster Art und Weise wird diese Hülle über die Pflanze gestülpt und im Bereich des oberen umlaufenden Randes des Kübels befestigt. Ist das Heizband zusätzlich um den Kübel gewickelt, wird eine größere Hülle verwendet, die benachbart des Bodens des Kübels mit der Mantelfläche des Kübels befestigt wird. Dies kann mittels einer einfachen Schnur geschehen, die die Hülle umschließt und gegen den Kübel drückt.

Die erfindungsgemäße Vorrichtung ist demzufolge durchaus auch für Pflanzen geeignet, die dauerhaft in das Erdreich eingepflanzt sind. In diesem Fall wird das Heizband um den außerhalb des Erdreichs befindlichen Bereich der Pflanze, insbesondere das Blattwerk der Pflanze, geschlungen und über diesen Pflanzenbereich die Hülle gestülpt, die im Bereich des Erdreichs fixiert wird, beispielsweise indem Gewichte auf den unteren umlaufenden Rand der Hülle gelegt werden und diesen bezüglich des Erdreichs fixieren.

Es ist nicht erforderlich, die Hülle über die Pflanze zu stülpen. Die Art und Weise der Anbringung der Hülle hängt vom Aufbau der Hülle ab. Vorzugsweise weist die Hülle einen in deren Mantelbereich befindlichen Reißverschluss, eine Druckknopfleiste oder dergleichen auf, die es ermöglicht, die geöffnete Hülle von der Seite an der Pflanze anzubringen und dann zu schließen.

Da die Hülle als mehrlagige Luftpolster-Folie ausgebildet ist, ist nur ein geringer Wärmeverlust innerhalb der Hülle zu verzeichnen. Das Luftpolster isoliert die Hülle zur umgebenden Außenluft. Vorzugsweise ist die Hülle dreilagig und es sind zwischen den jeweiligen Lagen die Luftpolster angeordnet. Die Hülle besteht insbesondere aus Kunststoff. Die Hülle könnte durchaus auch aus zwei Lagen mit dazwischen befindlichem Luftpolster bestehen. Die einzelnen Lagen sind vorzugsweise mittels Stegen verbunden, sodass sich zwischen den beiden Lagen bzw. bei Verwendung von mehreren Lagen zwischen benachbarten Lagen Luftpolsterkammern gebildet sind.

Besonders einfach und kostengünstig lässt sich die Vorrichtung darstellen, wenn die Hülle als flexible Hülle gestaltet ist. Es ist somit nicht erforderlich, die Hülle mit separaten Stützelementen oder dergleichen zu versehen, die der Hülle die notwendige Formstabilität verleihen. Die Hülle wird vielmehr über die Pflanze gezogen und liegt hierbei an dieser an. Ist die Hülle unten abgedichtet, beispielsweise bei Anlage am Mantel des Kübels und zusätzlicher Fixierung mittels eines Seiles oder aber indem die Hülle auf dem Erdreich aufliegt und mittels Gewichten, insbesondere Steinen, dort fixiert ist, kann kein nennenswerter Luftaustausch zwischen der Hülle und der umgebenden Luft erfolgen. Hierdurch stellt sich innerhalb der Hülle ein vorteilhaftes Raumklima, insbesondere unter dem Aspekt der Feuchtigkeit innerhalb der Hülle, ein.

Gemäß einer besonderen Ausführungsform der Erfindung ist vorgesehen, dass das Heizband als selbstregelndes Heizband ausgebildet ist. Derartige selbstregelnde Heizbänder können nicht überhitzen oder durchbrennen, auch nicht bei überlappender Anordnung der Heizbänder. Gemäß einer vorteilhaften Gestaltung ist vorgesehen, dass das selbstregelnde Heizband zwei parallel verlaufende Leiter und einen elektrisch leitfähigen Kunststoff aufweist, wobei der Kunststoff die beiden Leiter aufnimmt. Der Strom fließt zwischen den parallel verlaufenden, insbesondere aus Kupfer bestehenden Leitern durch den elektrisch leitfähigen Kunststoff. Dabei verhält sich das halbleitende Material, d. h. der molekular vernetztevernetzte Kunststoff, wie unendlich viele parallel geschaltete Heizwiderstände. Das Heizband kann deshalb an jeder beliebigen Stelle gekürzt oder verlängert werden, ohne dass der Widerstand sich verändert. Das Halbleitermaterial besteht aus einem stromdurchlässigen Kunststoff. Steigt die Temperatur, dehnen sich die Kunststoffmoleküle aus, und unterbrechen die Strompfade. Je höher die Temperatur steigt, umso geringer wird der Stromfluss und die Leistung sinkt. Ein Überhitzen ist damit ausgeschlossen, selbst wenn die Heizbänder sich kreuzen oder zu nah beieinander liegen.

Die Ausbildung des Heizbands als selbstregelndes Heizband ermöglicht es dem Anwender der Vorrichtung somit das Heizband beliebig um die Pflanze zu legen. Es muss keine Rücksicht auf sich kreuzende oder zu nah beieinander liegende Heizbänder genommen werden.

Es ist insbesondere vorgesehen, dass die Heizeinrichtung einen Regler aufweist. Dieser bildet vorteilhaft eine Baueinheit mit dem Heizband. Die erfindungsgemäße Heizeinrichtung besteht vorzugsweise aus dem Heizband, dem Regler und einem Stecker. Es ist somit nur erforderlich, die Heizeinrichtung an der Pflanze anzubringen und den Stecker in eine übliche Steckdose einzustecken, ferner die Pflanze mit der Hülle zu umgeben und die Hülle gegebenenfalls an der Außenseite des Kübels oder im Bereich des Erdreichs zu befestigen.

Der Regler der Heizeinrichtung ist insbesondere als Frostwächter ausgebildet, der die Heizeinrichtung bei Unterschreiten einer definierten Temperatur, benachbart dem Gefrierpunkt, insbesondere eine Temperatur von + 3° Celsius, einschaltet und bei steigender Temperatur wieder ausschaltet.

Weitere Merkmale der Erfindung sind in den Unteransprüchen, der Beschreibung der Figuren und den Figuren selbst dargestellt, wobei bemerkt wird, dass alle Einzelmerkmale und alle Kombinationen von Einzelmerkmalen erfindungswesentlich sind.

In den Figuren ist die Erfindung anhand eines Ausführungsbeispiels dargestellt, ohne auf dieses beschränkt zu sein. Es zeigt:
- Figur 1: eine räumliche Ansicht der erfindungsgemäßen Vorrichtung zum Schutz von Pflanzen vor Frost, wobei die Pflanze als Kübelpflanze ausgebildet ist und zusätzlich dargestellt ist,
- Figur 2: die in Figur 1 gezeigte Vorrichtung mit Pflanze, allerdings ohne die in Figur 1 dargestellte Hülle,
- Figur 3: eine Ansicht der Hülle,
- Figur 4: eine vergrößerte Querschnittsdarstellung der Hülle gemäß dem Bereich IV in Figur 3 und
- Figur 5: eine Darstellung des Aufbaus des Heizbandes.

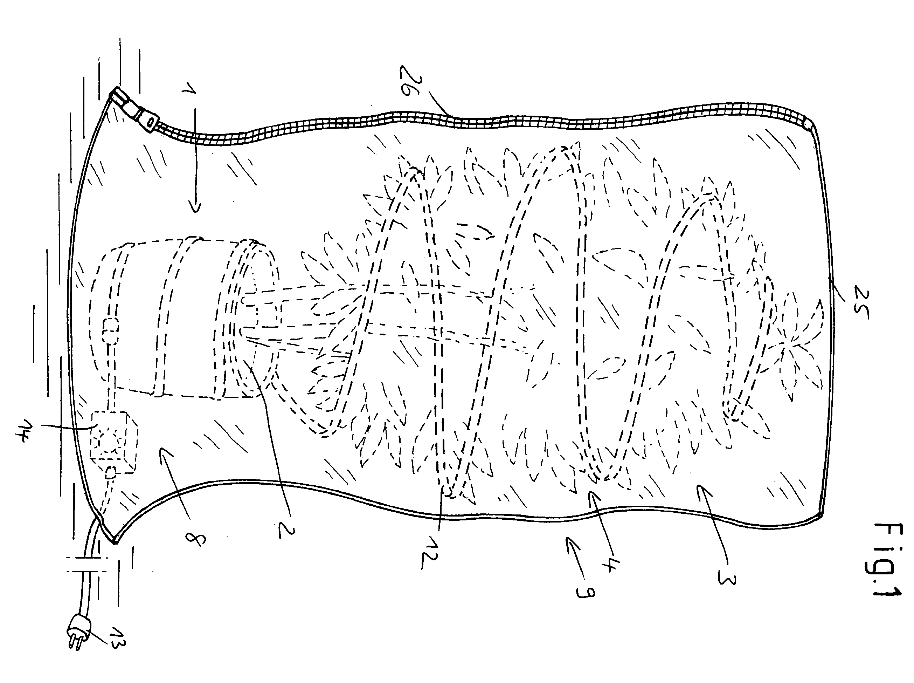

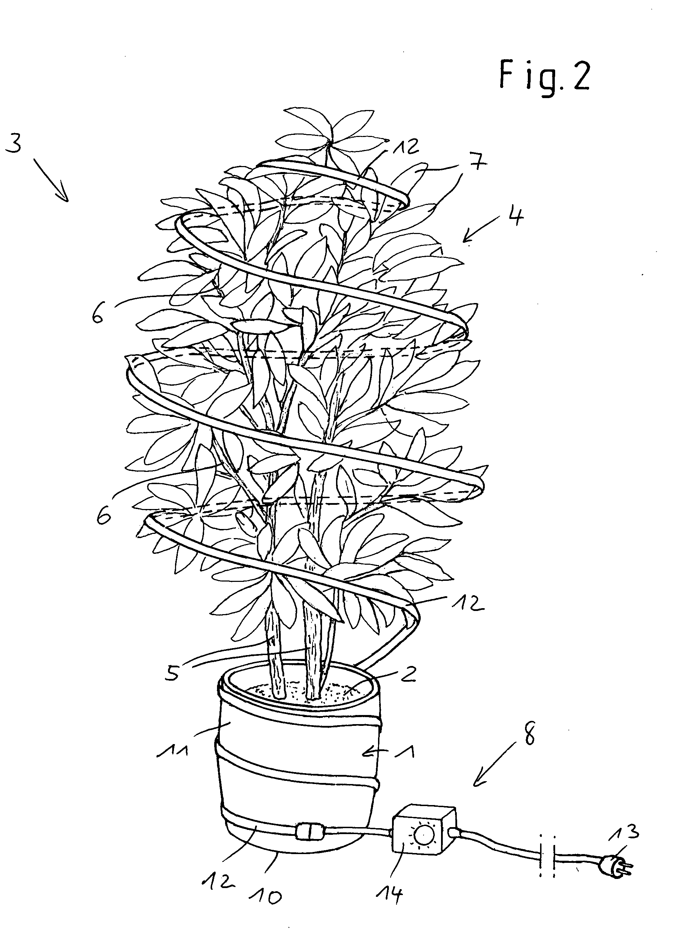

Die Figuren 1 und 2 zeigen einen Pflanzkübel 1 mit von diesem aufgenommenen Erdreich 2. In das Erdreich 2 ist eine Pflanze 3 eingepflanzt, bei der es sich beispielsweise um einen Oleander handelt. Dessen außerhalb des Erdreichs 2 der Pflanze 3 befindlicher Pflanzenbereich ist mit der Bezugsziffer 4 bezeichnet. Stämme der Pflanze 3 sind mit der Bezugsziffer 5, Zweige mit der Bezugsziffer 6 und Blätter mit der Bezugsziffer 7 bezeichnet.

Zum Schutz der Pflanze 3 vor Frost ist eine Vorrichtung mit einer Heizeinrichtung 8 und einer Hülle 9 vorgesehen. Die Heizeinrichtung 8 weist ein Heizband 12 auf, das beliebig um die Pflanze in dem außerhalb des Erdreichs der Pflanze befindlichen Pflanzenbereich legbar ist. Im konkreten Ausführungsbeispiel ist das Heizband 12, ausgehend von einem Anschlussstecker 13 und ausgehend von dem Bodenbereich 10 des Pflanzkübels 1, wendelförmig um den Mantel 11 des Pflanzkübels 1 gelegt und von dort um die Pflanze 3 in dem außerhalb des Erdreichs 2 befindlichen Pflanzenbereich 4 um das Blattwerk der Pflanze 3 bis zur Pflanzenspitze gelegt, wobei das Heizband 12 durchaus innerhalb des Blattwerks, somit benachbart der Zweige 6 und/oder des bzw. der Stämme 5 geführt sein kann. Die Heizeinrichtung 8 weist einen Regler 14 auf, der als Frostwächter ausgebildet ist. Der Frostwächter schaltet die Heizeinrichtung bei Unterschreiten einer definierten Temperatur, benachbart dem Gefrierpunkt, insbesondere einer Temperatur von + 3° Celsius, ein und bei steigender Temperatur wieder aus.

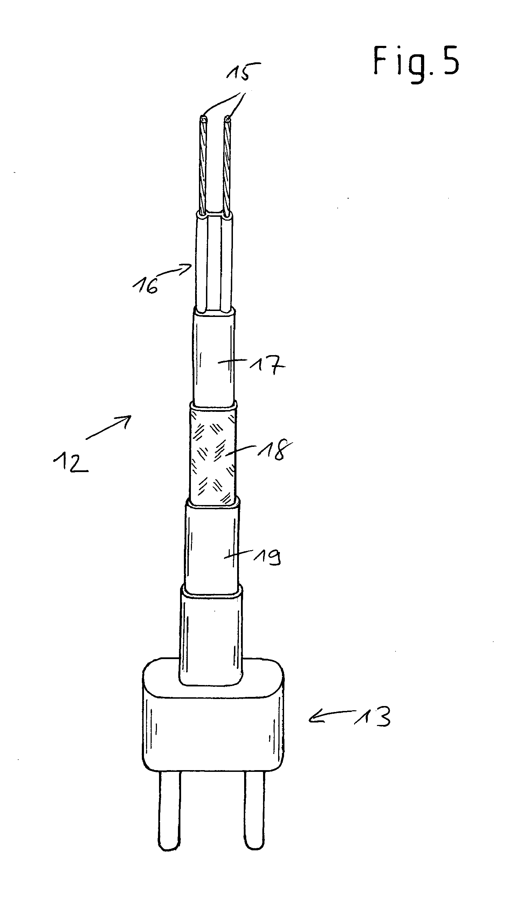

Wie insbesondere der Darstellung der Figur 5 zu entnehmen ist, weist das Heizband 12 zwei parallel verlaufende Leiter auf, bei denen es sich um Kupferleiter 15 handelt. Diese Leiter 15 sind in einen elektrisch leitfähigen Kunststoff 16 eingebettet, sodass Strom zwischen den parallel verlaufenden Leitern 15 durch den elektrisch leitfähigen Kunststoff 16 fließen kann. Hierbei verhält sich der molekular vernetzte Kunststoff wie unendlich viele parallel geschaltete Heizwiderstände. Somit kann das Heizband 12 an jeder beliebigen Stelle gekürzt oder verlängert werden, ohne dass der Widerstand sich verändert. Steigt die Temperatur, dehnen sich die Kunststoffmoleküle aus und unterbrechen die Strompfade. Je höher die Temperatur steigt, umso geringer wird der Stromfluss und die Leistung sinkt. Somit ist ein Überhitzen ausgeschlossen, selbst wenn das Heizband sich kreuzt oder Heizbandabschnitte zu nah beieinander liegen. Den Kunststoff 16 umgibt eine Basisisolierung 17, die von einem verzinten Kupfer-Geflecht 18 umgeben ist. Dieses wird von einem PE-Außenmantel umschlossen. Der Regler 14 bildet eine Baueinheit mit dem Heizband 12.

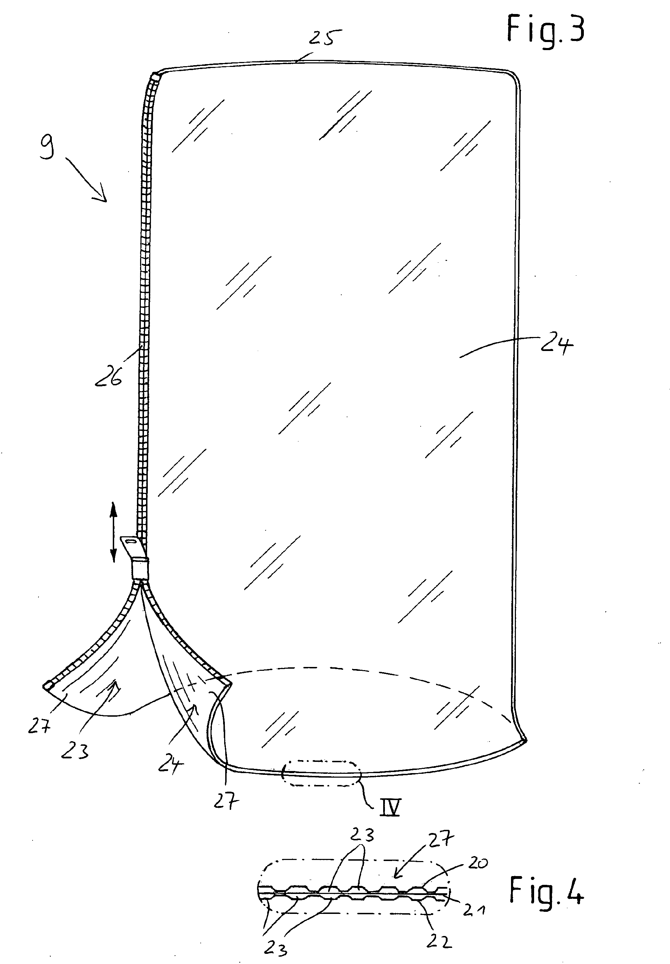

Figur 1 veranschaulicht, dass über die Pflanze 3 einschließlich des Pflanzkübels 1 die Hülle 9 gestülpt ist. Die Hülle 9 ist als flexible Haube gestaltet, somit nicht knickstabil ausgebildet und wird in Folge dessen von dem Pflanzenbereich 4 gehalten. Hergestellt wird die Hülle 9 beispielsweise aus einer mehrlagigen Kunststofffolie, insbesondere, wie es der Darstellung der Figuren 3 und 4 zu entnehmen ist, aus einer aus drei Lagen 20, 21 und 22 bestehenden Kunststofffolie, wobei die Lagen 20 und 21 bzw. 21 und 22 partiell miteinander verschweißt sind, sodass sich zwischen diesen benachbarten Lagen 20 und 21 bzw. 21 und 22 Luftpolster 23 ergeben. Dieses Ausgangsmaterial der Kunststofffolie wird doppelt aufeinander gelegt, wobei die sich hierdurch ergebenden beiden Abschnitte 23 und 24 der dreilagigen Folie im Bereich der oberen Schmalseite 25 miteinander verschweißt werden und im Bereich der freien Längsseiten der Folie ein Reißverschluss 26 angebracht wird, der sich über die gesamte Länge dieser Längsseiten erstreckt. In der Figur 3 ist dieser Reißverschluss 26 in der teilweise geschlossenen Position, in der Figur 1 in der vollständig geschlossenen Position veranschaulicht. In Folge dessen lässt sich die Hülle 9 bei geöffnetem Reißverschluss 26 seitlich über die Pflanze ziehen und es braucht dann nur noch der Reißverschluss 26 geschlossen werden. Die dreilagige Folie ist mit der Bezugsziffer 27 bezeichnet.

## Patentansprüche

1. Vorrichtung zum Schutz von Pflanzen (3) vor Frost, mit einer Heizeinrichtung (8) und einer Hülle (9) zum Umgeben des außerhalb des Erdreichs (2) der Pflanze (3) befindlichen Pflanzenbereichs (4), **gekennzeichnet durch** folgende Merkmale:
- die Heizeinrichtung (8) weist ein Heizband (12) auf, das beliebig um die Pflanze (3) in dem außerhalb des Erdreichs (2) der Pflanze (3) befindlichen Pflanzenbereich (4) legbar ist,
- die Hülle (9) ist als mehrlagige Luftpolster-Folie (27) ausgebildet.

2. Vorrichtung nach Anspruch 1, **dadurch gekennzeichnet, dass** das Heizband (12) als selbstregelndes Heizband ausgebildet ist.

3. Vorrichtung nach Anspruch 2, **dadurch gekennzeichnet, dass** das Heizband (12) zwei parallel verlaufende Leiter (15) und einen elektrisch leitfähigen Kunststoff (16) aufweist, wobei der Kunststoff (16) die beiden Leiter (15) aufnimmt.

4. Vorrichtung nach Anspruch 3, **dadurch gekennzeichnet, dass** die beiden parallel verlaufenden Leiter (15) Kupferleiter sind.

5. Vorrichtung nach Anspruch 3 oder 4, **dadurch gekennzeichnet, dass** der Kunststoff (16) ein molekular vernetzter Kunststoff ist.

6. Vorrichtung nach einem der Ansprüche 1 bis 5, **dadurch kennzeichnet, dass** die Heizeinrichtung (8) einen Regler (14) aufweist, insbesondere der Regler (14) eine Baueinheit mit dem Heizband (12) bildet.

7. Vorrichtung nach Anspruch 6, **dadurch gekennzeichnet, dass** die Heizeinrichtung (8) aus dem Heizband (12), dem Regler (14) und einem Stecker (13) gebildet ist.

8. Vorrichtung nach Anspruch 6 oder 7, **dadurch gekennzeichnet, dass** der Regler (14) als Frostwächter ausgebildet ist, der die Heizeinrichtung (8) bei unterschreiten einer definierten Temperatur, benachbart dem Gefrierpunkt, insbesondere einer Temperatur von + 3° Celsius, einschaltet und bei steigender Temperatur wieder ausschaltet.

9. Vorrichtung nach einem der Ansprüche 1 bis 8, **dadurch gekennzeichnet, dass** die Hülle (9) dreilagig ist, mit zwischen den drei Lagen (20, 21, 22) angeordneten Luftpolstern, insbesondere die Hülle (9) aus Kunststoff besteht.

10. Vorrichtung nach einem der Ansprüche 1 bis 9, **dadurch gekennzeichnet, dass** die Hülle (9) als flexible Haube gestaltet ist und den Bereich der Pflanze (3), der sich außerhalb des Erdreichs (2) befindet sowie gegebenenfalls einen die Pflanze (3) aufnehmenden Kübel (1) umschließt.

11. Vorrichtung nach einem der Ansprüche 1 bis 10, **dadurch gekennzeichnet, dass** die Heizeinrichtung (8) zusätzlich unmittelbar an einem die Pflanze (3) aufnehmenden Kübel (1), an der Außenseite (11) des Kübels (1), anliegt.
